# EUROPEAN PATENT APPLICATION

(11) **EP 4 822 775 A1**
(43) Date of publication of application: **14.10.2026**
(21) Application number: 26170972.9
(22) Date of filing: 07.04.2026
(51) Int. Cl.: H01M 4/36, H01M 4/48, H01M 4/62

(54) **ANODE ACTIVE MATERIAL FOR LITHIUM SECONDARY BATTERY, METHOD OF PREPARING THE SAME AND LITHIUM SECONDARY BATTERY INCLUDING THE SAME**

(30) Priority: 07.04.2025 KR 20250045008
(71) Applicant: SK On Co., Ltd., Seoul 03161 (KR); SK Innovation Co., Ltd., Seoul 03188 (KR)
(72) Inventor: PARK, Yang Kyu, 34124 Daejeon (KR); KIM, Seon Ah, 34124 Daejeon (KR); LEE, Jong Hyuk, 34124 Daejeon (KR); CHUNG, Ju Ho, 34124 Daejeon (KR); CHOI, Wan Uk, 34124 Daejeon (KR)
(74) Representative: Prüfer & Partner mbB Patentanwälte · Rechtsanwälte

(57) **Abstract**

An anode active material for a lithium secondary battery includes a silicon oxide particle. A Si-O atomic bond distance of the silicon oxide particle which is measured from a pair distribution function (PDF) obtained by an X-ray diffraction (XRD) analysis of the silicon oxide particle is in a range from 3 Å to 3.3 Å.

## Description

### BACKGROUND

### 1. Field

The present disclosure relates to an anode active material for a lithium secondary battery, a method of preparing the same and a lithium secondary battery including the same.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an hybrid automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

For example, a lithium secondary battery may include a cathode and an anode. An electrode such as the cathode and the anode may include an electrode active material capable of reversibly absorbing and releasing lithium ions. A current may be generated through a chemical reaction in the electrode. A graphite-based material or a silicon-based material may be used as an active material for the anode. The silicon-based active material may provide high energy density, but a volume of the silicon-based active material may expand, or mechanical or chemical defects may occur during a charging and discharging process to degrade a life-span of a secondary battery.

### SUMMARY

According to an aspect of the present disclosure, there is provided an anode active material for a lithium secondary battery having improved power and life-span properties.

According to an aspect of the present disclosure, there is provided a method of preparing an anode active material for a lithium secondary battery having improved power and life-span properties.

According to an aspect of the present disclosure, there is provided a lithium secondary battery having improved power and life-span properties.

According to embodiments of the present disclosure, an anode active material for a lithium secondary battery includes a silicon oxide particle. A Si-O atomic bond distance of the silicon oxide particle which is measured from a pair distribution function (PDF) obtained by an X-ray diffraction (XRD) analysis of the silicon oxide particle is in a range from 3 Å to 3.3 Å.

In some embodiments, the silicon oxide particle may include SiOx (0 < x ≤ 2).

In some embodiments, the Si-O atomic bond distance of the silicon oxide particle measured from the PDF obtained by the XRD analysis may be in a range from 3.05 Å to 3.15 Å.

In some embodiments, a Si-Si atomic bond distance of the silicon oxide particle which is measured from a pair distribution function (PDF) obtained by an XRD analysis may be in a range from 4.4 Å to 4.8 Å.

In some embodiments, a Si-Si atomic bond distance of the silicon oxide particle which is measured from a pair distribution function (PDF) obtained by an XRD analysis may be in a range from 4.45 Å to 4.5 Å.

In some embodiments, the silicon oxide particle may include a core portion and a surface portion formed on the core portion, and an oxidation number ratio defined by Equation 1 may be in a range from 0.4 to 0.9. [Equation 1] $oxidation number ratio = {O}_{S} / {O}_{C}$

In Equation 1, O_{S} is an oxidation number of the surface portion of the silicon oxide particle measured by an X-ray photoelectron spectroscopy (XPS) analysis, and O_{C} is an oxidation number of the core portion of the silicon oxide particle measured by the XPS analysis.

In some embodiments, the shortest distance from a surface of the silicon oxide particle to the core portion may be 30 nm or more.

In some embodiments, a Raman spectroscopic spectrum peak intensity ratio defined by Equation 2 may be in a range from 1 to 5. [Equation 2] $Raman spectroscopic spectrum peak intensity ratio = I \left(520\right) / I \left(470\right)$

In Equation 2, I(520) is a peak intensity of the silicon oxide particle in a region where a wavenumber is 520 cm⁻¹ in a Raman spectroscopic spectrum, and I(470) is a peak intensity of the silicon oxide particle in a region where a wavenumber is 470 cm⁻¹ in the Raman spectroscopic spectrum.

In some embodiments, the Raman spectroscopic spectrum peak intensity ratio of the silicon oxide particle may be in a range from 1 to 3.5.

In some embodiments, a crystallite size of the silicon oxide particle measured by an XRD analysis and defined by Equation 3 may be in a range from 3 nm to 7 nm. [Equation 3] $L = \frac{0.9 λ}{βcosθ}$

In Equation 3, L is the crystallite size (nm), λ is an X-ray wavelength (nm), β is a full width at half maximum of a peak of a (111) plane of the silicon oxide particle (rad), and θ is a diffraction angle (rad).

In some embodiments, a specific surface area of the silicon oxide particle may be in a range from 1 m²/g to 5 m²/g.

In some embodiments, an average particle size (D50) of the silicon oxide particle may be in a range from 2 µm to 7 µm.

In some embodiments, the anode active material may further include a carbon-based active material.

In some embodiments, the carbon-based active material may include artificial graphite, natural graphite or a mixture thereof.

In some embodiments, a content of the silicon oxide particle may be greater than 0 wt%, and less than or equal to 10 wt% based on a total weight of the anode active material.

In some embodiments, the anode active material may further include a carbon coating layer formed on at least a portion of a surface of the silicon oxide particle.

According to embodiments of the present disclosure, a lithium secondary battery includes an anode including the above-described anode active material, and a cathode opposing the anode.

In a method for preparing an anode active material for a lithium secondary battery, silicon sources may be mixed and heat-treated to obtain a silicon oxide particle. A Si-O atomic bond distance of the silicon oxide particle which is measured from a pair distribution function (PDF) obtained by an X-ray diffraction (XRD) analysis of the silicon oxide particle may be in a range from 3 Å to 3.3 Å.

In some embodiments, a temperature of the heat-treating is in a range from 800 °C to 1200 °C.

In some embodiments, the silicon source may include a silicon particle and a silicon dioxide (SiO₂) particle.

According to embodiments of the present disclosure, silicon oxide particles having a predetermined crystallinity may be included so that expansion of an electrode may be suppressed while achieving a conductivity of lithium ions during charging and discharging. Accordingly, power and life-span properties of a lithium secondary battery may be improved.

The anode active material for a lithium secondary battery and the lithium secondary battery according to the present disclosure may be widely applied in green technology fields such as an electric vehicle, a battery charging station, a solar power generation, a wind power generation, etc., using a battery, etc. The anode active material for a lithium secondary battery and the lithium secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

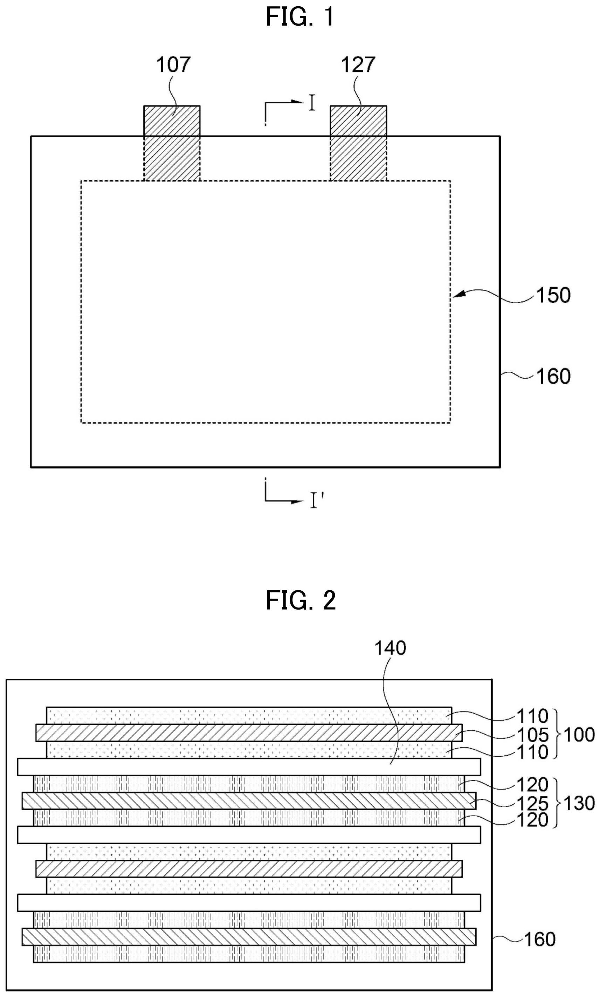

FIG. 1 and FIG. 2 are a schematic plan view and a schematic cross-sectional view, respectively, illustrating a lithium secondary battery in accordance with example embodiments.

### DETAILED DESCRIPTION OF THE EMBODIMENTS

According to embodiments of the present invention, an anode active material for a lithium secondary battery including a silicon oxide particle is provided.

According to embodiments of the present invention, an anode and a lithium secondary battery including the anode active material are provided.

An anode active material for a lithium secondary battery according to embodiments of the present disclosure (hereinafter, referred to as an anode active material) includes silicon oxide particles.

The silicon oxide particle may have a high energy density, and thus may improve an initial efficiency and a charge/discharge capacity of the anode active material. However, the silicon oxide particle may react with an electrolyte solution to form a solid electrolyte interface (SEI), and may cause a gas generation and a resistance increase due to irreversible decomposition of the electrolyte solution.

In some embodiments, the silicon oxide particle may include a silicon oxide. For example, the silicon oxide may include SiOx (0<x≤2).

In an embodiment, the silicon oxide (SiOx) may include a lithium compound or a magnesium compound. For example, SiOx including the lithium compound or the magnesium compound may be a SiOx pretreated with lithium or magnesium. For example, the SiOx including the lithium compound or the magnesium compound may include a lithium silicate or a magnesium silicate.

The silicon oxide particle may be provided as a main particle that substantially provides an activity of the anode. For example, in aspect of an energy density and a charge/discharge capacity of the secondary battery, the silicon oxide particle may function as a main compound providing the activity of the anode.

In some embodiments, the silicon oxide may include a crystalline structure or an amorphous structure.

In an embodiment, the silicon oxide may include both a crystalline structure and an amorphous structure. For example, a volume expansion of the anode active material and side reactions with the electrolyte solution may be suppressed by the crystalline structure. Additionally, a crystallite size of the silicon oxide particle and a ratio of a crystalline region and an amorphous region may be maintained within an appropriate range by the amorphous structure. Accordingly, a secondary battery having improved capacity and life-span properties may be provided.

In example embodiments, a Si-O atomic bond distance of the silicon oxide particle measured from a pair distribution function (PDF) obtained through an X-ray diffraction (XRD) analysis is in a range from 3 Å to 3.3 Å.

For example, the silicon oxide particles may include a form in which silicon particles are distributed in a SiO₂ matrix. Accordingly, particle expansion may be reduced by the SiO₂ matrix to improve the life-span properties while improving capacity properties from the silicon particles.

For example, if the Si-O atomic bond distance exceeds 3.3 Å, the atomic bond distance in the Si-O matrix increases excessively to cause particle degradation during repeated charging and discharging. For example, if the Si-O atomic bond distance is less than 3 Å, crystallinity may be decreased excessively and the side reactions with the electrolyte solution may be increased, and mechanical stability at high temperature may be deteriorated.

In some embodiments, the Si-O atomic bond distance of the silicon oxide particle measured from a pair distribution function (PDF) obtained through the XRD analysis, may be in a range from 3.05 Å to 3.15 Å, or from 3.09 Å to 3.15 Å. In the above range, crystallinity of the silicon oxide may be enhanced to suppress the side reactions with the electrolyte solution while achieving mobility of lithium ions. Accordingly, high capacity and high power properties of the secondary battery may be achieved while improving a capacity retention at high temperature.

In some embodiments, a Si-Si atomic bond distance of the silicon oxide particle measured from the pair distribution function (PDF) obtained through the XRD analysis may be in a range from 4.4 Å to 4.8 Å. For example, if the Si-Si atomic bond distance increases excessively, crystallinity of the silicon oxide may be decreased. Accordingly, capacity properties of the anode active material may be degraded, and particle degradation may occur due to volume expansion.

In an embodiment, the Si-Si atomic bond distance of the silicon oxide particle measured from the pair distribution function (PDF) obtained through the XRD analysis may be in a range from 4.45 Å to 4.7 Å, or from 4.45 Å to 4.5 Å. In the above range, mobility of lithium ions may be enhanced while further suppressing expansion of the anode active material.

For example, the Si-O atomic bond distance and/or the Si-Si atomic bond distance may be obtained by the pair distribution function (PDF) analysis. For example, a sample containing the silicon oxide particles may be powder-treated and an X-ray diffraction analysis may be performed. A reduced structure function of the silicon oxide particles may be obtained by the XRD analysis. A PDF pattern may be obtained by performing a Fourier transform on the measured values.

For example, the above X-ray spectroscopic analysis may be performed for about 10 to 20 minutes using a Cu X-ray and/or Ag X-ray source. Point, line and/or area detectors may be used as a detector for the X-ray spectroscopic analysis. The results measured by the analysis may be converted into Q values. For example, the Q values may be obtained by Relation 1. [Relation 1] $Q = 4 π sinθ / λ \left[{Å}^{- 1}\right]$

In the above Relation 1, θ is a diffraction angle (rad) and λ is an X-ray wavelength (nm).

For example, the measured Q value may represent a resolution of the PDF analysis. For example, a minimum resolution may be achieved by only selecting values greater than or equal to 12 Å⁻¹ among the measured Q values.

The values greater than or equal to 12 Å⁻¹ may be selected among the measured Q values, and a PDF pattern representing a Y-axis (intensity) value with respect to an X-axis (20) may be obtained by a Fourier transform. The Fourier transform may be performed using a software (product name: PDFgetX3).

The atomic bond distance may be obtained from an intensity of a peak corresponding to a Si-O atomic bonds and a Si-Si atomic bond among the obtained PDF patterns.

In some embodiments, the silicon oxide particle may include a core portion and a surface portion formed on the core portion.

For example, the surface portion may be formed integrally with the core portion and may be formed to surround the core portion. For example, a thickness of the surface portion may be 30 nm or more.

For example, when an oxidation number of Si is measured from an outermost surface of the particle, a point where the oxidation number of Si is not changed may be referred to as an outer boundary of the core portion.

In some embodiments, an oxidation number ratio defined by Equation 1 below may be in a range from 0.4 to 0.9. [Equation 1] $Oxidation Number Ratio = {O}_{S} / {O}_{C}$

In Equation 1, O_{S} is an oxidation number of the surface portion of the silicon oxide particle obtained by an X-ray photoelectron spectroscopy (XPS) analysis, and O_{C} is an oxidation number of the core portion of the silicon oxide particle obtained by the XPS analysis.

As used herein, the terms "oxidation number of silicon oxide" and/or "oxidation number" may represent a ratio of moles of oxygen element to moles of silicon element obtained by performing the XPS analysis on the silicon oxide particle.

For example, O_{S} may be a ratio of moles of oxygen element to moles of silicon element obtained by the XPS of the surface portion. For example, O_{S} may be a z value when a composition of the silicon oxide of the surface portion is represented as SiO_{z}.

For example, O_{C} may be a ratio of moles of oxygen element to moles of silicon element obtained by the XPS of the core portion. For example, O_{C} may be a y value when a composition of the silicon oxide of the core portion is represented as SiO_{y}.

For example, if the oxidation number ratio is excessively increased, a thickness of an oxide layer at the surface portion may be increased to reduce mobility of lithium ions. For example, if the oxidation number ratio is excessively decreased, the SiO₂ matrix may not be sufficiently formed in the core portion to cause expansion of the anode active material and increase the side reactions with the electrolyte solution. Accordingly, the capacity retention of the lithium secondary battery may be decreased.

In some embodiments, the oxidation numbers of the core portion and/or surface portion of the silicon oxide particle may be obtained from a Si2p spectrum graph obtained by the XPS.

For example, deconvolution of the obtained Si2p spectrum may be performed to separate peak regions representing Si⁰, Si¹⁺, Si²⁺, Si³⁺ and Si⁴⁺.

For example, a Si₀ peak region may be a region having a binding energy of 98 eV to 100 eV, a Si¹⁺ peak region may be a region having a binding energy of 100 eV to 101 eV, a Si²⁺ peak region may be a region having a binding energy of 101 eV to 102 eV, a Si³⁺ peak region may be a region having a binding energy of 102 eV to 103 eV, and a Si⁴⁺ peak region may be a region having a binding energy of 103 eV to 106 eV.

The number of silicon and oxygen atoms in each peak region may be calculated using the obtained Si⁰, Si¹⁺, Si²⁺, Si³⁺ and Si⁴⁺ peak areas. The oxidation number of the silicon oxide at the surface portion and/or the core region may be obtained using the calculated total number of silicon atoms and the total number of oxygen atoms.

In some embodiments, the shortest distance from the surface of the silicon oxide particle to the core portion may be 30 nm or more. For example, a thickness of the surface portion may be 30 nm or more. For example, a thickness of the surface portion may be in a range from 30 nm to 50 nm.

For example, O_{C} may be calculated from data obtained while etching the surface of the silicon oxide particle to a depth of 30 nm or more using an argon ion gun for the XPS analysis.

For example, after etching the surface of the silicon oxide particle to the depth of 30 nm or more using the argon ion gun, the Si2p spectrum graph may be obtained, and a deconvolution may be performed to measure the peak areas as described above.

In an embodiment, the oxidation number ratio defined by the above Equation 1 may be in a range from 0.5 to 0.8, or from 0.6 to 0.7. In the above range, the capacity retention and the charge/discharge properties of the lithium secondary battery may be further improved.

In some embodiments, a peak intensity ratio in a Raman spectroscopic spectrum defined by Equation 2 below may be in a range from 1 to 5. [Equation 2] $peak intensity in Raman spectroscopic spectrum = I \left(520\right) / I \left(470\right)$

in Equation 2, I(520) is a peak intensity of the silicon oxide particle in a region having a wavenumber of 520 cm⁻¹ in the Raman spectroscopic spectrum, and I(470) is a peak intensity of the silicon oxide particle in a region having a wavenumber of 470 cm⁻¹ in the Raman spectroscopic spectrum.

For example, I(520) may be a peak intensity corresponding to a crystalline region of the silicon oxide particle (e.g., a region having a crystalline Si structure) in the Raman spectroscopic spectrum obtained by the Raman spectroscopy. I(470) may be a peak intensity corresponding to an amorphous region of the silicon oxide particle (e.g., a region having an amorphous Si structure).

For example, as the peak intensity ratio of the Raman spectroscopic spectrum increases, a growth of a crystalline silicon (hereinafter, abbreviated as c-Si) relative to an amorphous silicon (hereinafter, abbreviated as a-Si) in the silicon oxide particle may be promoted. As the peak intensity ratio of the Raman spectroscopic spectrum decreases, the growth of c-Si relative to a-Si may be suppressed.

As a content of c-Si increases, a volume change of the anode active material during charge/discharge process may be increased, and the life-span properties of the secondary battery may be deteriorated.

In some embodiments, the peak intensity ratio of the Raman spectroscopic spectrum may be in a range from 1 to 3.5. In the above range, a content of a-Si may be increased, so that the energy density may be increased while suppressing the volume expansion of the anode active material during charge/discharge.

For example, the Raman spectroscopic analysis may be performed by selecting a specific region on the surface of the silicon oxide particles and using a Raman mapping of a Raman spectrometer on the region.

For example, the Raman spectroscopic analysis may be performed by arbitrarily designating 100 to 5,000 regions on the surface of the silicon oxide particle . The area of each region may be (30 µm to 50 µm) × (30 µm to 75 µm).

In an embodiment, a mapping interval for the Raman mapping may be set to, e.g., about 1 µm to about 10 µm with respect to an x-axis and about 1 µm to about 5 µm with respect to a y-axis.

A laser wavelength of the Raman spectrometer may be, e.g., in a range from about 532 nm to about 785 nm, a laser power may be in a range from about 5 mW to about 90 mW, a laser exposure time may be in a range from about 3 seconds to about 20 seconds, and the number of scans may be 1 to 5 times.

In some embodiments, a crystallite size of the silicon oxide particle measured by an XRD analysis may be in a range from 3 nm to 7 nm, from 3 nm to 5 nm, or from 3.5 nm to 4.5 nm. In the above range, initial power properties may be improved, and generation of cracks in the anode active material may be suppressed. Accordingly, power and life-span properties of the secondary battery may be further improved.

For example, the crystallite size of the silicon oxide particle may be calculated by a Scherrer equation defined by Equation 3 below. [Equation 3] $L = \frac{0.9 λ}{βcosθ}$

In Equation 3, L is the crystallite size (nm), λ is an X-ray wavelength (nm), β is a full width at half maximum (FWHM) of a (111) plane, and θ is a diffraction angle (rad).

In some embodiments, in Equation 3, β may be a FWHM correcting a value derived from a device. In an embodiment, Si may be used as a standard material for reflecting the device-derived value. In this case, a FWHM profile of Si over an entire 20 range may be fitted, and the device-derived FWHM may be expressed as a function of 2θ. Thereafter, a value obtained by subtracting and correcting the FWHM value derived from the device in the corresponding 20 obtained from the function may be used as β.

In some embodiments, a specific surface area of the silicon oxide particle may be in a range from 1 m²/g to 5 m²/g, or from 2 m²/g to 4²/g. For example, the specific surface area may be measured by a BET (Brunauer-Emmett-Teller) measurement method based on an adsorbed amount of nitrogen gas using a specific surface area measurement device.

In the above range, the capacity retention of the secondary battery may be improved, while further enhancing the charge-discharge capacity properties by insertion and desorption of lithium ions.

In some embodiments, an average particle size (D50) of the silicon oxide particles may be in a range from 2 µm to 7 µm.

In some embodiments, D10 of the silicon oxide particle may be in a range from 1 µm to 4 µm.

In an embodiment, D90 of the silicon oxide particle may be in a range from 6 µm to 9 µm. For example, D10, D50 and D90 may represent particle diameters at volume fractions of 10% 50%, and 90%, respectively, in a volume-weighted particle size distribution measured from the silicon oxide particles.

In the above range, uniformity of the silicon oxide particles and packing density of the anode active material may be improved, and degradation of the particles may be suppressed. Accordingly, volume change of the anode containing the anode active material may be reduced.

In some embodiments, a carbon coating layer may be formed on at least a portion of the surface of the silicon oxide particle. The carbon coating layer may suppress exposure of the silicon oxide particle to the electrolyte solution, so that an activity of the anode may be maintained.

For example, during repeated charging and discharging of a secondary battery, the surface of the silicon oxide particle may be mechanically or chemically damaged. Additionally, gas may be generated by the side reactions occurring when the surface of the silicon oxide particle contacts the electrolyte solution.

The carbon coating layer may suppress swelling of the silicon oxide particle due to repeated charging and discharging, and may prevent the side reactions with the electrolyte solution. Accordingly, the life-span properties and the capacity retention of the secondary battery may be improved.

A content of the carbon coating layer may be measured using a thermogravimetric analysis (TGA). For example, the content of the carbon coating layer may be calculated by measuring a weight change through a heat treatment and an injection of nitrogen (N₂) gas.

In some embodiments, the anode active material may further include a carbon-based active material. For example, the anode active material may include a mixture of the silicon oxide particles and the carbon-based active material.

In some embodiments, the carbon-based active material may include an amorphous carbon such as a fired coke, a mesophase pitch carbide, hard carbon, soft carbon, and/or a crystalline carbon such as natural graphite and artificial graphite. These may be used alone or in a combination of two or more therefrom.

In an embodiment, the carbon-based active material may include artificial graphite, natural graphite, or a mixture thereof. Accordingly, high-temperature storage and high-temperature life-span properties may both be improved without reducing the energy density and the capacity of the lithium secondary battery.

In some embodiments, a content of the silicon oxide particle may be greater than 0 wt%, and less than or equal to 10 wt% based on a total weight of the anode active material. In the above range, expansion of the anode active material and a short-circuit in the electrode may be suppressed, and the life-span and the capacity retention may be improved.

In example embodiments, the silicon oxide particles may be formed by mixing and heat-treating silicon sources. In some embodiments, a temperature of the heat-treatment may be in a range from 800 °C to 1200 °C.

In some embodiments, the silicon source may include silicon particles and silicon dioxide (SiO₂) particles. For example, the silicon source may include at least one selected from the group consisting of silicon and silicon dioxide (SiO₂).

In an embodiment, the silicon source may be used by mixing silicon and silicon dioxide. For example, the silicon source may be used by mixing silicon (Si) and silicon dioxide (SiO₂) in a weight ratio of 1:1 to 3:1, e.g., 2:1.

For example, the silicon source may be mixed and introduced into a reactor, and heat-treated under a vacuum atmosphere at a temperature of about 800 °C to 1200 °C, 840 °C to 1100 °C, 860 °C to 1000 °C, 900 °C to 980 °C, or 920 °C to 980 °C. In some embodiments, a period of the heat-treatment may be 4 to 6 hours, and a heating rate may be in a range from 8 °C/min to 12 °C/min.

For example, the silicon source may be introduced into a reactor and heat-treated by mixing at 300 rpm to 700 rpm.

In example embodiments, the mixture of the heat-treated silicon source may be deposited and cooled on a cooling plate. A temperature of the cooling plate may be in a range from about 700 °C to 900 °C.

The cooled mixture of the silicon source may be pulverized and classified to form silicon oxide particles.

For example, the aforementioned Si-O bond distance of the silicon oxide particle may be controlled by adjusting the temperature of the heat-treatment in the reactor, the period of the heat-treatment, the heating rate, the mixing rate, and/or the temperature of the cooling plate.

For example, a plurality of the silicon oxide particles may be formed by changing the temperature of the heat-treatment in the reactor and the temperature of the cooling plate, and particles having the Si-O bond distance of 3 Å to 3.3 Å may be selected among the formed silicon oxide particles, and used as a anode active material.

In some embodiments, the prepared silicon oxide particles and a carbon source gas may be mixed and calcined to form a carbon coating on at least a portion of a surface of the silicon oxide particle.

For example, the carbon source gas may be a mixture of a methane gas and an argon gas.

In some embodiments, the methane gas may be replaced with an ethylene gas, a propylene gas, or an acetylene gas, or may be used in combination with the ethylene gas, the propylene gas or the acetylene gas.

In some embodiments, the carbon coating layer may be formed by chemical vapor deposition (CVD). For example, the carbon source gas may be introduced to the silicon oxide particles and calcined at a temperature of about 400°C to 1200°C to form the carbon coating layer. For example, a heating rate during the calcination may be in a range from 5 °C/min to 20 °C/min, and a calcination period may be in a range from 60 minutes to 360 minutes.

FIGS. 1 and FIGS. 2 are a schematic plan view and a schematic cross-sectional view, respectively, illustrating a secondary battery according to example embodiments. For example, FIG. 2 is a cross-sectional view taken along a line I-I' of FIG. 1.

Referring to FIGS. 1 and 2, the lithium secondary battery may include a cathode 100 and an anode 130 opposing the cathode 100.

The cathode 100 may include a cathode current collector 105 and a cathode active material layer 110 formed on at least one surface of the cathode current collector 105.

In example embodiments, the cathode active material layer 110 may be formed on both surfaces (e.g., an upper surface and a lower surface) of the cathode current collector 105. For example, the cathode active material layer 110 may be formed on each of the upper and lower surfaces of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium, and silver.

The cathode active material layer 110 may include a cathode active material, a binder, and/or a conductive material. For example, a cathode slurry may be prepared by mixing and stirring the cathode active material with the binder and/or the conductive material in a solvent. The cathode slurry may be coated on the cathode current collector 105, and then dried and pressed to form the cathode active material layer 110.

The cathode active material may include a compound capable of reversibly intercalating and de-intercalating lithium ions.

In example embodiments, the cathode active material may include a lithium-nickel metal oxide. The lithium-nickel metal oxide may further include at least one of cobalt (Co), manganese (Mn) and aluminum (Al).

The cathode active material may include a lithium transition metal oxide represented by Chemical Formula 1.

[Chemical Formula 1] LiₐNi_{b}M_{1-b}O₂

In Chemical Formula 1, 0.95≤a≤1.05, b≥0.5, and M may include at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In an embodiment, the lithium transition metal oxide may include nickel (Ni), and may further include at least one of cobalt (Co) and manganese (Mn). For example, the lithium transition metal oxide may include a nickel-cobalt-manganese (NCM)-based lithium oxide.

Nickel (Ni) may be provided as a metal related to the capacity of the lithium secondary battery. As a content of the nickel increases, the capacity and power of the lithium secondary battery may be increased. However, if the content of nickel is excessively increased, mechanical and electrical stability may be degraded.

Cobalt (Co) may be included to improve a conductivity or reduce a resistance of the lithium secondary battery, and manganese (Mn) may be included to improve mechanical and electrical stability of the lithium secondary battery.

The chemical structure represented by Chemical Formula 1 represents a bonding relationship included in a lattice structure or a crystal structure of the cathode active material, and is not intended to exclude introduction of another additional element. For example, M may serve as a main active element of the cathode active material. Chemical Formula 1 is provided to express the bonding relationship of the main active element and is to be understood as a formula encompassing introduction and substitution of the additional element.

In an embodiment, an auxiliary element for enhancing chemical stability of the cathode active material or the crystal structure in addition to the main active element may be further included. The auxiliary element may be incorporated into the crystal structure to form a bond, and this case is to be understood as being included within the range of the chemical structure represented by Chemical Formula 1.

The binder may include vinylidene fluoride-hexafluoropropylene copolymer (PVDF-co-HFP), polyvinylidene fluoride (PVDF), polyacrylonitrile, polymethylmethacrylate, or the like.

The conductive material may include a carbon-based conductive material such as graphite, carbon black, graphene, carbon nanotube, etc., and/or a metal-based conductive material such as tin, tin oxide, titanium oxide, a perovskite material including LaSrCoO₃, LaSrMnO₃, etc.

In some embodiments, an electrode density of the cathode 100 may be in a range from 3.0 g/cc to 3.9 g/cc, or from 3.2 g/cc to 3.8 g/cc.

The anode 130 may include an anode current collector 125 and an anode active material layer 120 formed on at least one surface of the anode current collector 125. The anode active material layer 120 may be coated on each of upper and lower surfaces of the anode current collector 125.

In some embodiments, an anode slurry may be prepared by mixing and stirring the anode active material according to the above-described embodiments with a binder, a conductive material and/or a dispersant in a solvent. The anode slurry may be coated on at least one surface of the anode current collector 125, and then dried and pressed to prepare the anode 130.

The anode current collector 125 may include, e.g., gold, stainless steel, nickel, aluminum, titanium, copper, or an alloy thereof, and may include, e.g., copper or a copper alloy.

Materials substantially the same as or similar to the above-described materials may be used as the binder and the conductive material. In some embodiments, the binder for forming the anode may include an aqueous binder such as styrene-butadiene rubber (SBR) for compatibility with a carbon-based active material, and may be used together with a thickener such as carboxymethyl cellulose (CMC).

In example embodiments, an electrode density of the anode 130 may be in a range from 1.0 g/cc to 1.9 g/cc.

In some embodiments, a separator 140 may be interposed between the cathode 100 and the anode 130.

The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a nonwoven fabric formed of a glass fiber having a high melting point, a polyethylene terephthalate fiber, or the like.

In example embodiments, an electrode cell may be defined by the cathode 100, the anode 130 and the separator 140, and a plurality of the electrode cells may be repeatedly stacked to form the electrode assembly 150. For example, the electrode assembly 150 may be a winding type, a stacking type, a zigzag-folding type, or a stack-folding type.

The electrode assembly 150 may be accommodated in a case to define a lithium secondary battery.

In an embodiment, an electrolyte solution may be accommodated into the case 160 together with the electrode assembly 150.

In example embodiments, a non-aqueous electrolyte solution may be used as the electrolyte solution.

The non-aqueous electrolyte solution may include a lithium salt as an electrolyte and an organic solvent. The lithium salt may be expressed as, e.g., Li⁺X⁻, and examples of an anion (X-) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 1, electrode tabs (a cathode tab and an anode tab) included in each electrode cell may protrude from the cathode current collector 105 and the anode current collector 125, respectively, to extend to one side of the case 160. The electrode tabs may be fused together with the one side of the case 160 to be connected to an electrode lead (a cathode lead 107 and an anode lead 127) which are extended or exposed to an outside of the case 160.

Although FIG. 1 illustrates that the cathode lead 107 and the anode lead 127 are formed at the same side of the lithium secondary battery or the case 160, the cathode lead 107 and the anode lead 127 may be formed at opposite sides. For example, the cathode lead 107 may be formed at one end portion of the case 160, and the anode lead 127 may be formed at the other end portion of the case 160.

For example, the lithium secondary battery may be manufactured in a cylindrical type using a can, a prismatic type, a pouch type, or a coin type.

### Examples and Comparative Examples

### 1. Preparation of anode active material (A-1 to A-13)

Silicon oxide (SiOx) particles were obtained by mixing and heat-treating silicon (Si) and silicon dioxide (SiO₂) as silicon sources in a weight ratio of 2:1.

Specifically, 1000 g of the silicon source was introduced into a reactor and heat-treated while mixing at about 500 rpm for about 4 to 6 hours. A temperature of the heat-treatment was in a range from 840 °C to 1100 °C, and a heating rate was controlled to about 10 °C/min. The temperature of the heat-treatment and a period of the heat-treatment of the silicon source were controlled as shown in Table 1.

Silicon oxide particles having a carbon coating were prepared by depositing a methane gas onto the silicon oxide particles by a chemical vapor deposition (CVD).

Subsequently, physical properties of the carbon-coated silicon oxide particles were analyzed.

Thereafter, the silicon oxide particles satisfying properties of Tables 2 and 3 below were mixed with a carbon-based active material in a weight ratio of 5:95 to prepare anode active materials A-1 to A-13.

### 2. Measurement of Si-O and Si-Si bond distances

For the silicon oxide particles mixed in Examples and Comparative Examples A-1 to A-13, values measured by an XRD analysis were converted into PDF patterns using a Fourier transform, and a Si-Si bond distance and a Si-O bond distance were measured.

Specifically, an X-ray of a short wavelength (≤0.75 Å) was measured between a low scattering angle (20 = 1°~5°) and a high scattering angle (2θ = 65° ~120°), and the XRD analysis results were converted into Q values (Q=4πSinθ/λ). Subsequently, the results were converted into the PDF patterns using software (product name: PDFgetX3), and bonding distances for peaks corresponding to a Si-Si bond and a Si-O bond were measured.

### 3. Measurement of volume-based particle size distribution

The silicon oxide particles mixed in Examples and Comparative Examples A-1 to A-13 were dispersed in ethanol (CH₃CH₂OH) as a dispersion medium. A difference in diffraction patterns according to a particle size was measured and calculated using a laser diffraction particle size analyzer (Microtrac MT 3000). D10, D50 and D90 were measured by calculating particle diameters at points where volume fractions were 10%, 50% and 90%, respectively, in the measured volume-based particle size distribution curve.

### 4. Measurement of Si crystalline size

For the silicon oxide particles mixed in Examples and Comparative Examples A-1 to A-13, a scan was performed using a Cu X-ray source under conditions of 45 kV and 40 mA with 20 values set from 5° to 80° to obtain peak values. A crystalline size was calculated by deconvolution of the obtained peak values with respect to a crystal peak and an amorphous peak. The crystalline size for each (111) crystal plane was measured.

### 5. Measurement of crystallinity (I(520)/I(470))

A Raman spectroscopic analysis was performed on the silicon oxide particles mixed in Examples and Comparative Examples A-1 to A-13 to obtain a Raman spectrum. Peak intensities at 520 cm⁻¹ and 470 cm⁻¹ were measured in the Raman spectrum. The measured values were shifted and deconvolution was performed based on a center (1000 cm⁻¹) to calculate I(520)/I(470).

### 6. Measurement of BET specific surface area

The silicon oxide particles mixed in Examples and Comparative Examples A-1 to A-13 were measured using a BET method based on an amount of adsorbed nitrogen gas and using a specific surface area measuring device (BELSORP-mino II). Specifically, the particles were heated to 200 °C using a pre-treatment device, and then exposed to nitrogen gas for 60 minutes. After recording a weight of the sample including a holder, a weight of the sample to be measured alone was entered. A liquid nitrogen of an appropriate amount (baseline) was added, and then a specific surface area was measured.

### 7. Measurement of oxidation number ratio

The silicon oxide particles mixed in Examples and Comparative Examples A-1 to A-13 were attached to a carbon tape for sampling, and an XPS analysis was performed under conditions below to obtain Si2p spectra from a core portion and a surface portion of the silicon oxide particles.

### [XPS Analysis Conditions]

i) X-ray type: Al k alpha, 1486.68 eV, 900 µm Beam size
ii) Analyzer: CAE (constant analyzer energy) Mode
iii) Number of scans: 50
iv) Pass energy: 20 eV
v) Dwell Time: 100 ms
vi) Ion gun: Ar ion
vii) Ion energy: 4000 eV
viii) Etch Cycle: 300s
ix) Total Levels: 20

Specifically, an oxidation number of the surface portion was obtained by measuring a peak area in a 98 eV to 100 eV region, a peak area in a 100 eV to 101 eV region, a peak area in a 101 eV to 102 eV region, a peak area in a 102 eV to 103 eV region, and a peak area in a 103 eV to 106 eV region by deconvolution of the Si2p spectrum obtained by performing the XPS analysis on the surface portion of the silicon oxide particles.

The surface portion was defined as a depth to which the oxidation number was not changed while etching the surface of the silicon oxide particle. The oxidation number of the core portion was obtained by measuring a peak area in each of the aforementioned regions by deconvolution of the Si2p spectrum obtained by performing the XPS analysis on the core portion.

### 8. Fabrication of lithium secondary battery

An anode slurry was prepared by mixing the anode active material, carbon nanotube (CNT) as a conductive material, and styrene-butadiene rubber (SBR) as a binder in a weight ratio of 80:10:10. The anode slurry was coated onto a Cu foil, dried and pressed to prepare an anode having a mixture density of 3 mg/cm² (based on a cross-section) and 1.42 g/cc.

A coin cell-type secondary battery was manufactured using a Li-foil as a counter electrode and an electrolyte solution containing 1 wt% FEC and a 1.0 M LiPF₆ mixed solvent (EC:EMC = 3:7 volume ratio). A battery performance was evaluated after leaving the secondary battery at room temperature (25°C) for 12 hours.

**[Table 1]**

| | temperature of heat-treatment (°C) | heat-treating period (h) |
|---|---|---|
| Example 1 (A-1) | 940 | 5 |
| Example 2 (A-2) | 960 | 5 |
| Example 3 (A-3) | 850 | 6 |
| Example 4 (A-4) | 960 | 4 |
| Example 5 (A-5) | 840 | 6 |
| Example 6 (A-6) | 860 | 6 |
| Example 7 (A-7) | 940 | 6 |
| Example 8 (A-8) | 980 | 5 |
| Example 9 (A-9) | 1100 | 6 |
| Example 10 (A-10) | 920 | 5 |
| Comparative Example 1 (A-11) | 1000 | 5 |
| Comparative Example 2 (A-12) | 900 | 6 |
| Comparative Example 3 (A-13) | 1050 | 6 |

**[Table 2]**

| | Si-O bond distance(Å) | Si-Si bond distance (Å) |
|---|---|---|
| Example 1 (A-1) | 3.12 | 4.47 |
| Example 2 | 3.11 | 4.46 |
| (A-2) | | |
| Example 3 (A-3) | 3.13 | 4.49 |
| Example 4 (A-4) | 3.15 | 4.48 |
| Example 5 (A-5) | 3.18 | 4.50 |
| Example 6 (A-6) | 3.07 | 4.45 |
| Example 7 (A-7) | 3.12 | 4.47 |
| Example 8 (A-8) | 3.28 | 4.44 |
| Example 9 (A-9) | 3.29 | 4.57 |
| Example 10 (A-10) | 3.11 | 4.46 |
| Comparative Example 1 (A-11) | 2.07 | 4.39 |
| Comparative Example 2 (A-12) | 3.78 | 4.98 |
| Comparative Example 3 (A-13) | 3.88 | 5.01 |

**[Table 3]**

| particle size distribution (µm) | | | crystallite size (nm) | crystallinity | specific surface area (m²/g) | oxidation number ratio |
|---|---|---|---|---|---|---|
| D10 | D50 | D90 | | | | |
| 2.8 | 4.6 | 7.2 | 3.1 | 1.43 | 2.38 | 0.66 |
| 3.2 | 4.9 | 7.4 | 3.2 | 3.22 | 1.35 | 0.72 |
| 3.4 | 5.3 | 8.0 | 3.4 | 0.55 | 1.56 | 0.68 |
| 3.4 | 5.5 | 8.5 | 3.1 | 1.68 | 7.08 | 0.69 |
| 2.9 | 4.7 | 7.3 | 5.6 | 0.54 | 1.17 | 0.47 |
| 3.2 | 5.7 | 9.4 | 5.3 | 0.68 | 2.14 | 0.33 |
| 2.9 | 4.8 | 7.1 | 3.0 | 1.51 | 2.13 | 0.95 |
| 2.9 | 5.0 | 8.1 | 4.0 | 2.8 | 1.95 | 0.75 |
| 2.7 | 4.4 | 7.4 | 3.1 | 6.21 | 2.11 | 0.99 |
| 2.9 | 4.5 | 7.5 | 2.1 | 1.43 | 2.41 | 0.68 |
| 3.3 | 5.5 | 8.78 | 4.2 | 3.21 | 1.68 | 0.79 |
| 3.0 | 5.1 | 8.3 | 6.9 | 0.59 | 1.65 | 0.36 |
| 3.1 | 5.2 | 9.1 | 8.1 | 5.9 | 2.11 | 0.99 |

### Experimental Example

### (1) Evaluation on anode adhesion

An adhesion between the anode active material layer and the anode was evaluated by conducting a peel-off test on the anodes according to Examples and Comparative Examples using a 90° adhesion measuring instrument (UTM).

### (2) Evaluation on anode resistance

The electrode resistance of each anode of Examples and Comparative Examples was measured using a Hioki XF057 Probe unit measuring instrument under measurement conditions of a current of 100 µA, a voltage range of 0.5 V, and 500 pin contacts.

### (3) Evaluation on anode expansion

The lithium secondary batteries of Examples and Comparative Examples were subjected to a preliminary cycle under conditions of 0.005 V to 1.5 V, 0.1 C, and 0.01 CV, and an additional charging was performed under conditions of 0.005 V, 0.1 C, and 0.01 CV. A thickness of the anode active material layer was measured, and an electrode expansion ratio was calculated as an increase ratio relative to an initial thickness of the anode active material layer.

### (4) Evaluation on initial capacity and initial efficiency

For the secondary batteries according to Examples and Comparative Examples, charging (CC/CV, 0.1C, lower limit voltage 0.005V, cut-off current 0.01C) and discharging (CC, 0.1C, upper limit voltage 1.5V cut-off) were performed at 25°C to measure a charging capacity and a discharging capacity. The discharging capacity was measured as a ratio (%) relative to the charging capacity.

### (5) Evaluation on life-span property during repeated charging/discharging (35°C)

For the secondary batteries according to Examples and Comparative Examples, charging (CC/CV, 0.1C, lower limit voltage 0.005V, cut-off current 0.01C) and discharging (CC, 0.1C, upper limit voltage 1.5V cut-off) at 35°C were performed as one cycle to conduct the first cycle. Subsequently, a discharge capacity was measured by repeating the charge/discharge cycle 1,000 times based on a current density of 1C. A life-span property was evaluated as a percentage of a value obtained by dividing a discharge capacity at the 1,000th cycle by a discharge capacity at the 1st cycle.

### (6) Evaluation on high-temperature life-span property (45°C)

For the secondary batteries according to Examples and Comparative Examples, the first cycle was performed at 45°C with a single cycle of charging (CC/CV, 0.1C, lower limit voltage 0.005V, cut-off current 0.01C) and discharging (CC, 0.1C, upper limit voltage 1.5V cut-off). Subsequently, a discharge capacity was measured by repeating the charge/discharge cycle 800 times with a 10-minute interval. A high-temperature life-span property was evaluated as a percentage of a value obtained by dividing a discharge capacity at the 800 th cycle by a discharge capacity at the 1st cycle.

### (7) Evaluation on high-temperature storage property (60°C)

For the secondary batteries according to Examples and Comparative Examples, charging (CC/CV, 0.5C, upper limit voltage 4.2V, cut-off current 0.05C) and discharging (CC, 0.5C, lower limit voltage 2.5V cut-off) were performed once at 25°C, and then charged to SOC 100% and stored at 60°C for 12 weeks. After 12 weeks, a discharge capacity was measured, and a high temperature storage property was evaluated as a percentage of a value divided by an initial discharge capacity.

### (8) Evaluation on HPPC power property

An HPPC room temperature power property of each secondary battery according to Examples and Comparative Examples was measured based on an HPPC (Hybrid Pulse Power Characterization by FreedomCar Battery Test Manual) measurement method.

The results are shown in Table 4 and Table 5 below.

**[Table 4]**

| | electrode adhesion (N) | electrode resistance (mΩ·cm) | electrode expansion ratio (%) | initial capacity (Ah) | initial efficiency (%) |
|---|---|---|---|---|---|
| Example 1 | 0.240 | 34.2 | 8.1 | 23.52 | 88.63 |
| Example 2 | 0.233 | 40.4 | 8.7 | 23.45 | 88.44 |
| Example 3 | 0.238 | 40.6 | 9.3 | 23.76 | 88.23 |
| Example 4 | 0.230 | 46.8 | 9.9 | 23.39 | 88.32 |
| Example 5 | 0.166 | 57.6 | 14.8 | 22.35 | 87.79 |
| Example 6 | 0.173 | 59.1 | 15.6 | 22.56 | 87.86 |
| Example 7 | 0.196 | 57.2 | 14.1 | 22.30 | 87.87 |
| Example 8 | 0.190 | 57.0 | 15.1 | 22.10 | 87.77 |
| Example 9 | 0.194 | 57.5 | 13.5 | 22.62 | 87.88 |
| Example 10 | 0.172 | 59.2 | 14.2 | 22.56 | 88.12 |
| Comparative Example 1 | 0.170 | 61.1 | 15.8 | 21.08 | 85.98 |
| Comparative Example 2 | 0.164 | 60.9 | 15.9 | 20.98 | 85.67 |
| Comparative Example 3 | 0.158 | 61.2 | 18.8 | 20.77 | 84.01 |

**[Table 5]**

| | life-span property (%) | high-temperature life-span property(%) | high-temperature storage property (%) | power property (W/kg) |
|---|---|---|---|---|
| Example 1 | 90.3 | 89.1 | 85.3 | 3442 |
| Example 2 | 90.2 | 88.9 | 85.4 | 3399 |
| Example 3 | 90.2 | 88.8 | 84.2 | 3401 |
| Example 4 | 89.7 | 88.7 | 84.9 | 3412 |
| Example 5 | 85.6 | 86.9 | 81.8 | 3266 |
| Example 6 | 84.9 | 87.1 | 82.4 | 3298 |
| Example 7 | 88.5 | 86.9 | 82.3 | 3272 |
| Example 8 | 86.1 | 86.4 | 82.8 | 3266 |
| Example 9 | 87.8 | 87.2 | 82.6 | 3278 |
| Example 10 | 85.5 | 87.2 | 82.2 | 3246 |
| Comparative Example 1 | 82.6 | 85.9 | 80.8 | 2956 |
| Comparative Example 2 | 82.3 | 85.2 | 80.2 | 2899 |
| Comparative Example 3 | 81.21 | 84.7 | 80.1 | 2700 |

Referring to Tables 2 to 5 above, in the anodes of Examples, high adhesion and low resistance were obtained, and the volume expansion ratio was low even during repeated charging and discharging. Additionally, the lithium secondary battery had high initial efficiency and power property, and the life-span properties at room temperature and high temperature were improved compared to those from Comparative Examples.

However, in Comparative Examples, the adhesion of the anode was low and the expansion ratio was high, and the resistance was increased. Further, the life-span and power properties, and the initial efficiency of the lithium secondary battery were lower than those from Examples.

The invention relates also to the following numbered aspects:
Aspect 1. An anode active material for a lithium secondary battery comprising a silicon oxide particle,
   wherein a Si-O atomic bond distance of the silicon oxide particle which is measured from a pair distribution function (PDF) obtained by an X-ray diffraction (XRD) analysis of the silicon oxide particle is in a range from 3 Å to 3.3 Å.
Aspect 2. The anode active material for a lithium secondary battery of aspect 1, wherein the silicon oxide particle comprises SiOx (0 < x ≤ 2).
Aspect 3. The anode active material for a lithium secondary battery of aspect 1 or 2, wherein the Si-O atomic bond distance of the silicon oxide particle measured from the PDF obtained by the XRD analysis is in a range from 3.05 Å to 3.15 Å.
Aspect 4. The anode active material for a lithium secondary battery of any one of aspects 1 to 3, wherein a Si-Si atomic bond distance of the silicon oxide particle which is measured from a pair distribution function (PDF) obtained by an XRD analysis is in a range from 4.4 Å to 4.8 Å, or from 4.45 Å to 4.5 Å.
Aspect 5. The anode active material for a lithium secondary battery of any one of aspects 1 to 4, wherein the silicon oxide particle comprises a core portion and a surface portion formed on the core portion, and an oxidation number ratio defined by Equation 1 is in a range from 0.4 to 0.9:
   [Equation 1] $oxidation number ratio = {O}_{S} / {O}_{C}$
wherein, in Equation 1, O_{S} is an oxidation number of the surface portion of the silicon oxide particle measured by an X-ray photoelectron spectroscopy (XPS) analysis, and O_{C} is an oxidation number of the core portion of the silicon oxide particle measured by the XPS analysis.
Aspect 6. The anode active material for a lithium secondary battery of aspect 5, wherein the shortest distance from a surface of the silicon oxide particle to the core portion is 30 nm or more.
Aspect 7. The anode active material for a lithium secondary battery of any one of aspects 1 to 6, wherein a Raman spectroscopic spectrum peak intensity ratio defined by Equation 2 is in a range from 1 to 5, or from 1 to 3.5:

   [Equation 2] $Raman spectroscopic spectrum peak intensity ratio = I \left(520\right) / I \left(470\right)$
   wherein, in Equation 2, I(520) is a peak intensity of the silicon oxide particle in a region where a wavenumber is 520 cm⁻¹ in a Raman spectroscopic spectrum, and I(470) is a peak intensity of the silicon oxide particle in a region where a wavenumber is 470 cm⁻¹ in the Raman spectroscopic spectrum.
Aspect 8. The anode active material for a lithium secondary battery of any one of aspects 1 to 7, wherein a crystallite size of the silicon oxide particle measured by an XRD analysis and defined by Equation 3 is in a range from 3 nm to 7 nm:

   [Equation 3] $L = \frac{0.9 λ}{βcosθ}$
   wherein, in Equation 3, L is the crystallite size (nm), λ is an X-ray wavelength (nm), β is a full width at half maximum of a peak of a (111) plane of the silicon oxide particle (rad), and θ is a diffraction angle (rad).
Aspect 9. The anode active material for a lithium secondary battery of any one of aspects 1 to 8, wherein (a) a specific surface area of the silicon oxide particle is in a range from 1 m²/g to 5 m²/g, and/or (b) an average particle size (D50) of the silicon oxide particle is in a range from 2 µm to 7 µm.
Aspect 10. The anode active material for a lithium secondary battery of any one of aspects 1 to 9, further comprising a carbon-based active material, and optionally wherein the carbon-based active material comprises artificial graphite, natural graphite or a mixture thereof.
Aspect 11. The anode active material for a lithium secondary battery of any one of aspects 1 to 10, wherein a content of the silicon oxide particle is greater than 0 wt%, and less than or equal to 10 wt% based on a total weight of the anode active material.
Aspect 12. The anode active material for a lithium secondary battery of any one of aspects 1 to 11, further comprising a carbon coating layer formed on at least a portion of a surface of the silicon oxide particle.
Aspect 13. A lithium secondary battery, comprising:
   an anode comprising the anode active material of any one of aspects 1 to 12; and
   a cathode opposing the anode.
Aspect 14. A method for preparing an anode active material for a lithium secondary battery comprising mixing and heat-treating silicon sources to obtain a silicon oxide particle,
   wherein a Si-O atomic bond distance of the silicon oxide particle which is measured from a pair distribution function (PDF) obtained by an X-ray diffraction (XRD) analysis of the silicon oxide particle is in a range from 3 Å to 3.3 Å.
Aspect 15. The method of aspect 14, wherein (a) a temperature of the heat-treating is in a range from 800 °C to 1200 °C, and/or the silicon source comprises a silicon particle and a silicon dioxide (SiO₂) particle.

## Claims

1. An anode active material for a lithium secondary battery comprising a silicon oxide particle,
wherein a Si-O atomic bond distance of the silicon oxide particle which is measured from a pair distribution function (PDF) obtained by an X-ray diffraction (XRD) analysis of the silicon oxide particle is in a range from 3 Å to 3.3 Å.

2. The anode active material for a lithium secondary battery of claim 1, wherein the silicon oxide particle comprises SiOx (0 < x ≤ 2).

3. The anode active material for a lithium secondary battery of claim 1 or 2, wherein the Si-O atomic bond distance of the silicon oxide particle measured from the PDF obtained by the XRD analysis is in a range from 3.05 Å to 3.15 Å.

4. The anode active material for a lithium secondary battery of any one of claims 1 to 3, wherein a Si-Si atomic bond distance of the silicon oxide particle which is measured from a pair distribution function (PDF) obtained by an XRD analysis is in a range from 4.4 Å to 4.8 Å, or from 4.45 Å to 4.5 Å.

5. The anode active material for a lithium secondary battery of any one of claims 1 to 4, wherein the silicon oxide particle comprises a core portion and a surface portion formed on the core portion, and an oxidation number ratio defined by Equation 1 is in a range from 0.4 to 0.9: [Equation 1] $oxidation number ratio = {O}_{S} / {O}_{C}$ wherein, in Equation 1, O_{S} is an oxidation number of the surface portion of the silicon oxide particle measured by an X-ray photoelectron spectroscopy (XPS) analysis, and O_{C} is an oxidation number of the core portion of the silicon oxide particle measured by the XPS analysis.

6. The anode active material for a lithium secondary battery of claim 5, wherein the shortest distance from a surface of the silicon oxide particle to the core portion is 30 nm or more.

7. The anode active material for a lithium secondary battery of any one of claims 1 to 6, wherein a Raman spectroscopic spectrum peak intensity ratio defined by Equation 2 is in a range from 1 to 5, or from 1 to 3.5: [Equation 2] $Raman spectroscopic spectrum peak intensity ratio = I \left(520\right) / I \left(470\right)$ wherein, in Equation 2, I(520) is a peak intensity of the silicon oxide particle in a region where a wavenumber is 520 cm⁻¹ in a Raman spectroscopic spectrum, and I(470) is a peak intensity of the silicon oxide particle in a region where a wavenumber is 470 cm⁻¹ in the Raman spectroscopic spectrum.

8. The anode active material for a lithium secondary battery of any one of claims 1 to 7, wherein a crystallite size of the silicon oxide particle measured by an XRD analysis and defined by Equation 3 is in a range from 3 nm to 7 nm: [Equation 3] $L = \frac{0.9 λ}{βcosθ}$ wherein, in Equation 3, L is the crystallite size (nm), λ is an X-ray wavelength (nm), β is a full width at half maximum of a peak of a (111) plane of the silicon oxide particle (rad), and θ is a diffraction angle (rad).

9. The anode active material for a lithium secondary battery of any one of claims 1 to 8, wherein (a) a specific surface area of the silicon oxide particle is in a range from 1 m²/g to 5 m²/g, and/or (b) an average particle size (D50) of the silicon oxide particle is in a range from 2 µm to 7 µm.

10. The anode active material for a lithium secondary battery of any one of claims 1 to 9, further comprising a carbon-based active material, and optionally wherein the carbon-based active material comprises artificial graphite, natural graphite or a mixture thereof.

11. The anode active material for a lithium secondary battery of any one of claims 1 to 10, wherein a content of the silicon oxide particle is greater than 0 wt%, and less than or equal to 10 wt% based on a total weight of the anode active material.

12. The anode active material for a lithium secondary battery of any one of claims 1 to 11, further comprising a carbon coating layer formed on at least a portion of a surface of the silicon oxide particle.

13. A lithium secondary battery, comprising:
an anode comprising the anode active material of any one of claims 1 to 12; and
a cathode opposing the anode.

14. A method for preparing an anode active material for a lithium secondary battery comprising mixing and heat-treating silicon sources to obtain a silicon oxide particle,
wherein a Si-O atomic bond distance of the silicon oxide particle which is measured from a pair distribution function (PDF) obtained by an X-ray diffraction (XRD) analysis of the silicon oxide particle is in a range from 3 Å to 3.3 Å.

15. The method of claim 14, wherein (a) a temperature of the heat-treating is in a range from 800 °C to 1200 °C, and/or the silicon source comprises a silicon particle and a silicon dioxide (SiO₂) particle.
